# FASCICULE DE BREVET EUROPEEN

(11) **EP 4 630 910 B1**
(45) Date de publication et mention de la délivrance du brevet: **30.09.2026**
(21) Numéro de dépôt: 23820976.1
(22) Date de dépôt: 27.11.2023
(51) Int. Cl.: G06F 3/038, B64C 13/04, B64C 13/50

(54) **INTERFACE HOMME-MACHINE À CONNEXION SÉCURISÉE**
MENSCH-MASCHINE-SCHNITTSTELLE MIT SICHERER VERBINDUNG
HUMAN-MACHINE INTERFACE WITH A SECURE CONNECTION

(30) Priorité: 07.12.2022 FR 2212894
(43) Date de publication de la demande: 15.10.2025
(73) Titulaire: Safran Electronics & Defense, 75015 Paris (FR); Crouzet, 26000 Valence (FR)
(72) Inventeur: ATTRAZIC, Yannick, 77550 MOISSY-CRAMAYEL (FR); AUPHAN, Albert, 77550 MOISSY-CRAMAYEL (FR); CARTON, Hervé, 26000 VALENCE (FR)
(74) Mandataire: Casalonga
(86) Numéro de dépôt international: PCT/FR2023/051853
(87) Numéro de publication internationale: WO 2024/121483

(56) Documents cités:
- EP-A2- 2 261 116
- US-A1- 2009 312 892

## Description

### Domaine technique

L'invention a pour domaine technique les interfaces homme-machine et plus particulièrement de telles interfaces homme-machine destinées à être actionnées par la main d'un opérateur.

### Techniques antérieures

Une poignée de commande constitue un élément d'une interface homme-machine entre une main d'un opérateur, tel qu'un pilote, et un actionneur d'un véhicule ou d'un dispositif.

Les poignées de commande actuelles (également appelées « grips » en langue anglaise) intègrent, en plus des capteurs d'inclinaison X et Y, des boutons (simples ou multidirectionnels) ou molettes qui sont connectés directement par liaisons filaires aux calculateurs de bord. Selon les applications, leurs nombres diffèrent. Pour des applications à un aéronef de type hélicoptère, ce nombre est relativement important (10 à 20 boutons) et peut conduire à plus de 80 fils à faire transiter entre la poignée et lesdits calculateurs. De plus, selon le niveau de sureté de fonctionnement requis, chaque bouton peut intégrer plusieurs circuits électriques d'acquisition nécessitant chacun au moins une paire de fils. En outre, certaines poignées requérant d'autres fonctions, telles que la mesure d'effort, la gestion d'éclairage, l'identification de l'utilisateur, ou le diagnostic nécessitent des connexions électriques spécifiques, augmentant également le nombre de connexions filaires.

Une problématique rencontrée est liée à cette multitude de fonctions embarquées, nécessitant un câblage conséquent et source de pannes, mais est également liée à l'intégration de la poignée dans l'interface homme-machine l'accueillant, notamment en termes de problème de routage de câbles et de raideur parasite vis-à-vis des mouvements de la poignée.

Il existe un besoin pour une poignée de commande dans un contexte de manche de pilotage avec parties mobiles autorisant l'emploi d'une pluralité de boutons et de capteurs, associés au moins pour certains à une communication redondée, comprenant une communication de secours et facilitant la maintenance.

### Exposé de l'invention

L'invention a pour objet une interface homme-machine, notamment pour un véhicule ou pour un dispositif, comprenant au moins un élément de préhension muni d'au moins un moyen de génération de signaux, un contrôleur, et une embase assurant la fixation et la mobilité de l'élément de préhension ainsi que le passage de connexions de données. L'élément de préhension intègre au moins deux concentrateurs de données, chaque concentrateur de données étant connecté en entrée en parallèle à au moins un moyen de génération de signaux et connecté en sortie au contrôleur à travers l'embase par l'intermédiaire d'au moins un bus de données.

Un moyen de génération de signaux peut être choisi parmi un capteur d'inclinaison de l'élément de préhension par rapport à une position de repos, un bouton, un bouton multidirectionnel, un capteur d'effort et un capteur de préhension.

L'interface homme-machine peut comporter au moins un autre calculateur ou moyen de commande, chaque bus de données pouvant être connecté en plus du contrôleur audit au moins un autre calculateur ou moyen de commande.

L'interface homme-machine peut comporter au moins un moyen de contrôle de la poignée de commande, connecté chacun en sortie au contrôleur par un bus de données alternatif, chaque bus de données étant connecté audit au moins un moyen de contrôle de la poignée de commande, le moyen de contrôle de la poignée de commande étant configuré pour transmettre les données reçues du bus de données au contrôleur en plus des fonctions de contrôle de la poignée de commande.

L'interface homme-machine décrite ci-dessus peut comprendre au moins un moyen de communication connecté en entrée à au moins un moyen de génération de signaux en parallèle de la connexion aux concentrateurs de données, chaque moyen de communication étant connecté au contrôleur par une connexion discrète.

L'interface homme-machine décrite plus haut peut comprendre au moins un moyen de communication connecté en entrée à au moins un moyen de génération de signaux en parallèle de la connexion aux concentrateurs de données, chaque moyen de communication étant connecté au contrôleur par un bus de communication.

Un concentrateur de données peut comprendre un moyen de calcul et un moyen de communication connecté au bus de communication, le moyen de calcul étant configuré pour commander le moyen de communication connecté au bus de communication de sorte que les messages émis présentent une structure prédéfinie dans laquelle des bits de validité sont associés aux bits associés au signaux des moyens de génération de signaux, l'ensemble étant structuré en bytes associé chacun à un bit de parité, chaque message émis étant associé à un code tournant incrémenté à chaque émission, les bits de validité, les bits de parité et le code tournant étant configurés de sorte que l'on puisse détecter un caractère défaillant du message à la réception.

Un moyen de génération de signaux peut émettre simultanément un signal dit normalement ouvert, et un signal complémentaire dit normalement fermé.

L'invention a également pour objet un aéronef comprenant une interface telle que décrite ci-dessus, dans lequel le contrôleur est un contrôleur de vol.

### Brève description des dessins

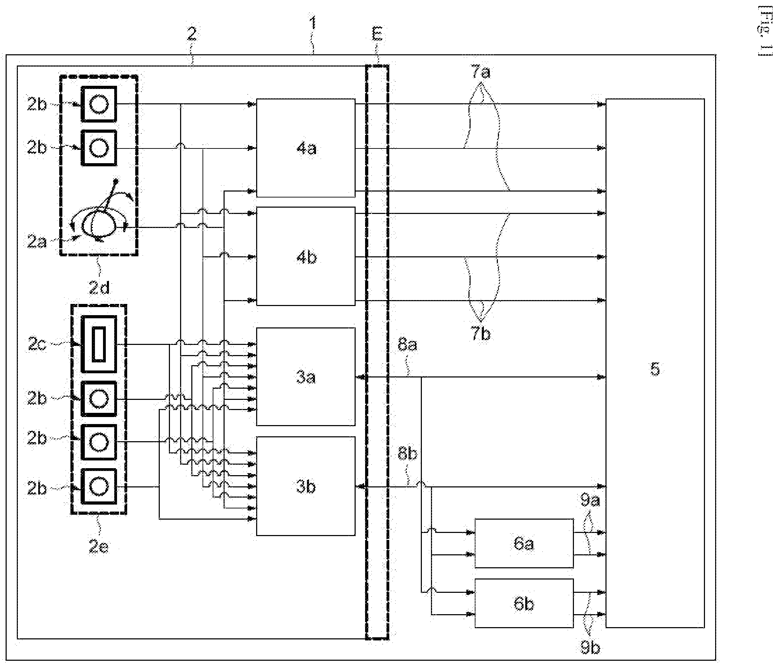

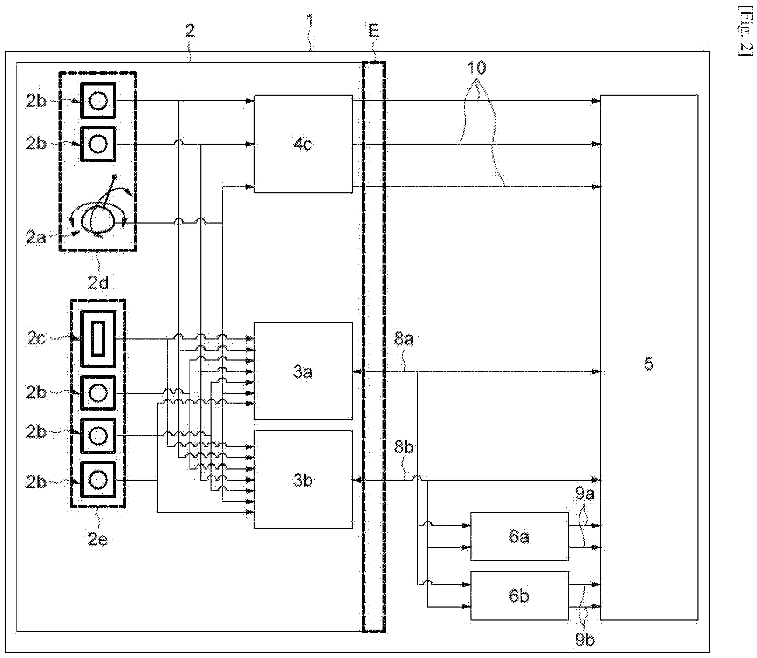

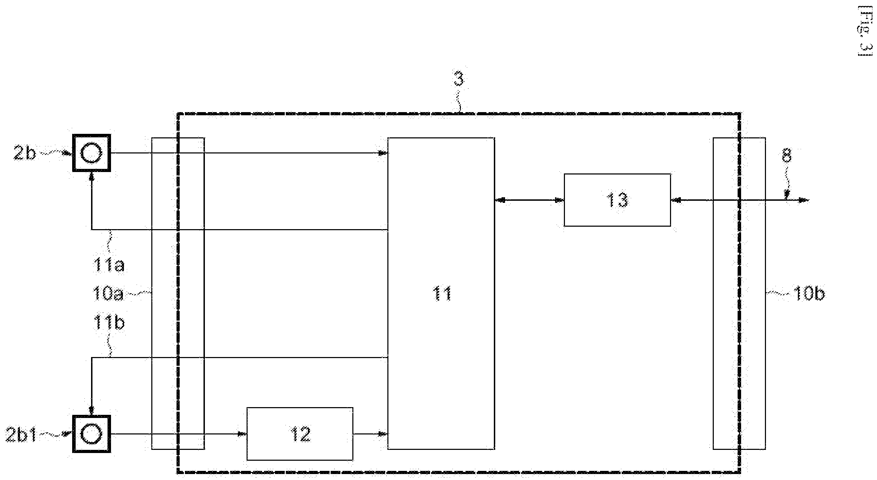

D'autres buts, caractéristiques et avantages de l'invention apparaîtront à la lecture de la description suivante, donnée uniquement à titre d'exemple non limitatif et faite en référence aux dessins annexés sur lesquels :
- la figure [Fig 1] illustre les principaux éléments d'un premier mode de réalisation d'une interface homme-machine selon l'invention,
- la figure [Fig 2] illustre les principaux éléments d'un deuxième mode de réalisation d'une interface homme-machine selon l'invention, et
- la figure [Fig 3] illustre les principaux éléments d'un concentrateur de données selon l'invention.

### Description détaillée

L'interface homme-machine selon l'invention comprend un élément de préhension, notamment une poignée de commande (« stick » ou « grip » en langue anglaise), muni de moyens de génération de signaux et configuré pour commander un véhicule, notamment un aéronef, dans laquelle la poignée de commande est fixée mécaniquement à l'interface homme-machine par une embase, à travers laquelle circulent différents fils de connexion électrique.

L'élément de préhension est relié à travers l'embase à un contrôleur tel qu'un contrôleur de vol FCS (acronyme anglophone pour « Flight Control System ») par l'intermédiaire de bus de données et de connexions de données.

Dans certains modes de réalisation, notamment pour les interfaces homme-machine munies d'un retour de force, l'élément de préhension est également connecté à au moins un moyen de contrôle de la poignée de commande tel qu'un IEU (acronyme anglophone pour « Inceptor Electronic Unit »).

Les moyens de génération de signaux sont choisis parmi un capteur d'inclinaison de l'élément de préhension par rapport à une position de repos, un bouton, des boutons multidirectionnels, des capteurs d'effort, des capteurs de préhension, tant en version analogique que numérique.

Des systèmes de retour d'information peuvent également être prévus tels que par exemple, des systèmes d'éclairage de tout ou partie de l'élément de préhension, des systèmes de retour d'effort ou des systèmes de retour haptique.

Les systèmes d'éclairage de tout ou partie de l'élément de préhension permettent d'indiquer à l'opérateur l'activation de modes de fonctionnement particuliers, ou la prise en compte de commandes spécifiques.

Les systèmes de retour haptique permettent la communication d'informations similaires à travers la vibration de tout ou partie de l'élément de préhension, éventuellement sous la forme de motifs de vibration spécifiques, de façon similaire à un retour haptique sur téléphone intelligent.

Pour certains éléments de préhension, des fonctions d'auto-test et d'identification sont nécessaires. De tels éléments de préhension sont munis d'un processeur spécialisé apte à émettre une information d'identification ou d'auto-test à réception d'une requête. Une telle requête est reçue notamment par l'intermédiaire des systèmes de retour d'information.

Dans un premier mode de réalisation illustré par la figure [Fig 1], l'interface homme-machine 1 comprend au moins un élément de préhension 2 muni de moyens de génération de signaux tels que des capteurs d'inclinaison 2a, des boutons 2b et des molettes 2c. Les moyens de génération de signaux sont associés chacun à l'un parmi au moins un groupe 2d de fonctions critiques et un groupe 2e de fonctions sécurisées.

Le groupe 2d de fonctions critiques concerne toutes les commandes et systèmes critiques pour l'intégrité de la commande du véhicule, notamment de l'aéronef. Sans ces fonctions, l'opérateur ne peut plus diriger le véhicule. Les moyens de génération de signaux associés à ce groupe 2d de fonctions critiques bénéficient de moyens de communication de secours afin d'assurer que les signaux générés seront toujours transmis au contrôleur de vol. Dans l'exemple illustré sur la figure [Fig 1], le groupe de fonctions critiques 2d comprend des capteurs d'inclinaison 2a, et deux boutons 2b disposés sur la poignée pour pouvoir être actionnés par la main du pilote. Les fonctions critiques associées aux boutons 2b ne présentent pas obligatoirement de lien avec le pilotage. Les fonctions critiques sont associées à des commandes critiques, définies par l'avionneur. Chaque avionneur utilise ces boutons à sa convenance.

La capacité de standardisation des fonctions critiques associées aux boutons 2b permet de répondre aux besoins des avionneurs disposant alors d'un type de poignée pouvant être préconfiguré pour chaque type de mission (par exemple, civile ou militaire). Il est alors possible de ne pas redéfinir toute l'interface pour chaque client.

On comprendra qu'il ne s'agit ici que d'exemples, nullement limitatifs quant aux fonctions comprises dans le groupe des fonctions critiques.

Le groupe 2e de fonctions sécurisées comprend l'ensemble des autres commandes et systèmes. La perte de ces fonctions placerait l'aéronef dans un mode de fonctionnement dégradé mais ne remettrait pas en cause son intégrité. Dans l'exemple illustré sur la figure [Fig 1], le groupe de fonctions sécurisées 2e comprend trois boutons et une molette 2e. Les commandes et fonctions sécurisées sont définies par l'avionneur, au niveau applicatif. Il s'agit ici aussi d'exemples non limitatifs.

Chaque signal généré par un des moyens de génération de signaux, indépendamment de son appartenance au groupe de fonctions critiques 2d ou au groupe de fonctions sécurisées 2e, est dupliqué au niveau du moyen de génération de signaux, de sorte qu'il est transmis simultanément à deux concentrateurs de données 3a,3b.

Les concentrateurs de données 3a,3b sont disposés dans l'élément de préhension 2 en amont de l'embase et sont connectés chacun à un bus de données 8a,8b distinct. Chaque bus de données 8a,8b est connecté à travers l'embase à un contrôleur de vol 5. L'embase est référencée E sur les figures 1 et 2.

Dans un mode de réalisation particulier, l'interface homme-machine comprend des IEU 6a,6b permettant de gérer certaines fonctions de l'interface homme-machine. Dans un tel cas, chaque IEU 6a,6b est connectée en amont aux bus de données 8a,8b et en aval au contrôleur de vol 5 par au moins un autre bus de données respectif 9a,9b. On comprendra ainsi que les bus de données 8a,8b permettent de connecter les concentrateurs de données 3a,3b à plusieurs calculateurs sans multiplier les connexions. Chaque calculateur peut ainsi avoir accès à l'ensemble des données générées par l'éléments de préhension et les moyens de génération de signaux. Une telle configuration est avantageuse dans le cas d'une architecture modulaire du contrôleur de vol FCS 5 (acronyme anglophone pour « Flight Control System »). Chaque module du contrôleur de vol FCS 5 connecté aux bus de données 8a,8b bénéficie ainsi de l'accès à toutes les données.

Le contrôleur de vol FCS 5 comprend des moyens de traitement et de communication, configurés de sorte à réaliser les calculs liés au modèle de vol et à l'émission des requêtes en commande des actionneurs.

Ainsi, un bus de données 8a,8b relie respectivement chaque concentrateur de données 3a,3b au contrôleur de vol 5 indépendamment du nombre de moyens de génération de signaux 2a,2b,2c reliés à un moyen de communication 4a. Les bus de données 8a,8b sont avantageusement des bus de type CAN.

Les moyens de génération de signaux associés au groupe des fonctions critiques 2d sont également connectés à un moyen de communication 4a ayant pour fonction la mise en forme et le conditionnement des signaux pour transmission au contrôleur de vol par l'intermédiaire d'une connexion discrète. Par connexion discrète, on entend une connexion filaire transportant les signaux d'un unique moyen de génération de signaux. On comprendra qu'un moyen de communication 4a peut être configuré pour traiter l'ensemble des signaux émis par les moyens de génération de signaux associés au groupe des fonctions critiques 2d en les transmettant vers une connexion discrète 7a dédiée à chaque signal. Alternativement, une pluralité de moyens de communication 4a peut être prévue. Chaque moyen de communication 4a peut être configuré pour traiter le signal émis par un moyen de génération de signaux associé au groupe des fonctions critiques 2d en le transmettant vers une connexion discrète 7a dédiée au signal traité. Dans ce cas d'application, deux pluralités de moyens de communication 4a, 4b sont prévues du fait de la duplication de chaque signal au niveau du moyen de génération de signaux. Chaque signal dupliqué est transmis simultanément aux concentrateurs de données 3a,3b et aux moyens de communication 4a,4b.

Chaque moyen de communication 4a,4b est connecté au contrôleur de vol 5 par l'intermédiaire de connexions discrètes, respectivement, 7a,7b, de sorte qu'une connexion discrète relie chaque moyen de communication 4a,4b au contrôleur de vol 5 pour chaque moyen de génération de signaux 2a,2b,2c relié aux moyens de communication 4a,4b.

Il apparait ainsi que les signaux générés par les moyens de génération de signaux associés au groupe de fonctions critiques 2d bénéficient de plus de voies de transmission que les signaux générés par les moyens de génération de signaux associés au groupe de fonctions sécurisées 2e. Ces signaux sont transmis par l'intermédiaire de chacun des concentrateurs de données 3a,3b et des bus de données associés 8a,8b, et par l'intermédiaire des moyens de communication 4a,4b et des connexions discrètes 7a,7b dupliquées. La dissimilarité dans la transmission de ces signaux permet de couvrir les cas de panne de mode commun.

On comprendra que le nombre de connexions transitant à travers l'embase disposée entre la poignée 2 et le contrôleur de vol 5 est d'autant plus réduit que le nombre de moyens de génération de signaux 2a,2b,2c connectés aux concentrateurs de données 3a,3b est grand et que le nombre de connexions discrètes est réduit.

Dans le cas particulier d'une interface homme-machine munie d'IEU, les signaux générés par les moyens de génération de signaux sont également transmis par l'intermédiaire des concentrateurs de données 3a,3b, des bus de données associés 8a,8b, des IEUs 6a,6b, et des bus de données 9a,9b en plus des chemins de transmission 3a, 3b, 4a, 4b. Cette transmission des signaux générés par les moyens de génération de signaux est réalisée en plus des fonctions propres des IEUs, notamment la gestion de la commande de dispositif de retour de force sur la poignée de commande. A titre d'illustration, un moyen de contrôle de la poignée de commande 6a,6b reçoit en entrée les signaux émis par chacun des concentrateurs 3a,3b, et les confronte de sorte à identifier une discordance indiquant une défaillance.

On dispose ainsi de trois chemins de transmission des signaux générés par les moyens de générations de signaux.

La figure [Fig 2] illustre un autre mode de réalisation, dans lequel les moyens de génération de signaux compris dans le groupe 2d de fonctions critiques et reliés aux moyens de communication 4a dans le premier mode de réalisation illustré par la figure [Fig 1] sont ici reliés à un moyen de communication alternatif 4c muni d'une connexion à un autre bus de données 10, distinct des bus de données 8a,8b entre les concentrateurs de données 3a,3b, les IEU 6a,6b et le contrôleur de vol FCS 5 ainsi que des bus de données alternatifs entre les IEU 6a,6b et le contrôleur de vol FCS 5.

Cet autre bus de données 10 permet de réduire encore le nombre de connexions entre l'élément de préhension 2 et le contrôleur de vol FCS 5 tout en bénéficiant encore de la facilité de maintenance due à l'utilisation de concentrateurs de données. A des fins de couverture de panne de mode commun, le moyen de communication alternatif 4c pourra être de conception dissimilaire.

La figure [Fig 3] illustre plus en détail la structure d'un concentrateur de données 3,3a,3b selon le premier et le deuxième mode de réalisation.

Le concentrateur de données 3,3a,3b est connecté d'une part à chacun des moyens de génération de signaux (2a,2b,2c) à travers un connecteur d'entrée 10a et d'autre part au bus de données 8,8a,8b à travers un connecteur de sortie 10b. On comprendra qu'un connecteur d'entrée 10a est prévu par connexion à un moyen de génération de signaux. Alternativement un unique connecteur d'entrée 10a est prévu avec une pluralité de points de connexion permettant de connecter de façon différenciée les moyens de génération de signaux. De même, le connecteur de sortie 10b peut comprendre un nombre de points de connexion adapté au type de bus de communication 8a,8b choisi.

Le concentrateur de données 3,3a,3b comprend un moyen de calcul 11, et un moyen de communication 13. Lorsque le concentrateur de données 3,3a,3b est connecté à un moyen de génération de signaux analogique, il comprend également un moyen de conversion analogique-numérique 12.

Les moyens de génération de signaux illustrés en exemple sur la figure [Fig 3] sont un bouton numérique 2b et un bouton analogique 2b1.

Le bouton numérique 2b est connecté à un moyen de calcul 11 du concentrateur de données 3,3a,3b. Le bouton analogique 2b1 est relié au même moyen de calcul 11 à travers un convertisseur analogique numérique 12 du concentrateur de données 3,3a,3b. Le moyen de calcul 11 est connecté au bus de données 8,8a,8b par l'intermédiaire de moyens de communication 13 du concentrateur de données 3,3a,3b. Le moyen de calcul 11 est tout moyen de traitement programmable ou configurable ou préconfiguré, comme par exemple un microprocesseur ou un contrôleur de type FPGA (acronyme anglophone pour « Field Programmable Gate Arrays »), ou encore un ASIC.

On comprendra que les moyens de génération de signaux 2b,2b1 illustrés sur la figure [Fig 3] ont été choisis uniquement à titre d'exemple afin d'illustrer les éléments 11,12,13 d'un concentrateur de données 3,3a,3b. D'autres moyens de génération de signaux peuvent être connectés à un concentrateur de données, tel qu'illustré dans les figures [Fig 1] ou [Fig 2]. Il est à noter que l'alimentation du concentrateur de données n'est pas illustrée.

Enfin, des connexions 11a,11b permettent d'émettre un signal de retour d'information en direction des boutons 2b,2b1, tel qu'une commande d'éclairage, un retour haptique ou un retour d'informations, par exemple.

On rappelle que les systèmes d'éclairage de tout ou partie de l'élément de préhension 2 permettent d'indiquer à l'opérateur l'activation de modes de fonctionnement particuliers, ou la prise en compte de commandes spécifiques.

Les systèmes de retour haptique permettent la communication d'informations similaires à travers la vibration de tout ou partie de l'élément de préhension 2, éventuellement sous la forme de motifs de vibration spécifiques, de façon similaire à un retour haptique sur téléphone intelligent.

Pour certains éléments de préhension 2, des fonctions d'auto-test et d'identification sont nécessaires. De tels éléments de préhension 2 sont munis d'un processeur spécialisé apte à émettre une information d'identification ou d'auto-test à réception d'une requête. Une telle requête est reçue notamment par l'intermédiaire des systèmes de retour d'information.

En plus de la redondance des voies de transmission décrite dans les modes de réalisation ci-dessus, les signaux émis sur les bus de données 8a,8b présentent une structure permettant d'ajouter un niveau supplémentaire de sécurité contre les erreurs. La structure des messages portés par les signaux transmis sur un bus de données est la suivante.

Un message émis sur le bus de données comprend des mots (« byte » en langue anglaise) formés chacun d'un même nombre de bits (mot en langue anglaise pour « caractère ») pouvant prendre la valeur 0 ou la valeur 1.

Chaque message comprend une longueur prédéfinie en bits et un agencement prédéfini des bytes. De même, chaque byte comprend une longueur prédéfinie en bits et un arrangement prédéfini de bits.

Les bits transmis dans chaque message comprennent des bits représentant des valeurs analogiques, dits bits de valeur analogique, des bits de validité analogique, des bits de signal NO, des bits de signal NC, et des bits de validité numérique décrits ci-dessous. L'ensemble de ces bits est provisionné dans un message pour chacun des moyens de génération de signaux, et indépendamment de sa nature numérique ou analogique. Les bits sont initialisés à une valeur par défaut associé à l'absence de valeur. Les bits concernant un moyen de génération de signaux sont écrasés par les valeurs adaptées lors de la formation du message de sorte qu'il est possible de déterminer à la réception les valeurs pertinentes pour chaque moyen de génération de signaux. Des bits de parité de chaque byte sont également compris dans chaque message.

Chaque moyen de génération de signaux 2a,,2c de type analogique (par opposition à numérique) comprend une sortie dont la tension ou le courant est proportionnel à l'action réalisée. Cette tension ou courant de sortie est numérisée par un convertisseur analogique-numérique ADC (acronyme anglophone pour « Analogic Digital Converter »). La valeur numérisée est mémorisée sur plusieurs bits contigus dits bits représentant des valeurs analogiques. Dans un but de contrôle, des bits contigus dits bits de validité analogique sont établis sur la base du contrôle de la validité et de la cohérence de la donnée acquise, le contrôle pouvant comprendre un contrôle de cohérence dans le temps (variabilité des valeurs acquises) ou un contrôle de valeurs extrémales par rapport à une plage de valeurs nominales. L'ensemble des contrôles est paramétrable.

Chaque moyen de génération de signaux 2bde type numérique (par opposition à analogique) comprend deux sorties, l'une portant un signal « normalement ouvert » dit signal NO (acronyme anglophone pour « Normally Open »), l'autre portant un signal complémentaire « normalement fermé » dit signal NC (acronyme anglophone pour « Normally Closed »)).

Les signaux portés par ces deux sorties sont ainsi toujours opposés. La valeur du signal NO est mémorisée sur un bit de signal NO. De même, la valeur du signal NC est mémorisée sur un bit de signal NC.

Une défaillance est alors déterminée par une équivalence des signaux portés par ces deux sorties. Pour réaliser cela, un traitement logique est appliqué aux signaux portés par ces deux sorties sous forme d'une porte logique XOR (« OU EXCLUSIF » en langue française) associée à une temporisation d'une durée prédéfinie, par exemple 50ms. Ainsi, si les deux signaux sont strictement différents pendant une durée supérieure à la durée prédéfinie, un bit de validité numérique, associé au moyen de génération de signaux 2b ayant généré les signaux NO/NC comparés est fixé à 1. Si les deux signaux sont identiques, ou s'ils ne sont pas strictement différents pendant une durée supérieure à la durée prédéfinie, le bit de validité numérique, associé au moyen de génération de signaux 2b ayant généré les signaux NO/NC comparés est fixé à 0.

Il est à noter qu'un dispositif physique, tel qu'un bouton peut comprendre plusieurs actions, par exemple un enfoncement et une direction de basculement. Chaque action est alors considérée comme un moyen de génération de signaux distinct et associée à un signal NO et un signal NC.

Un message émis sur le bus de données comprend en plus un code tournant codé sur plusieurs bits. Le code tournant est incrémenté d'une unité après chaque émission d'un message.

La sécurisation au niveau du message est assurée par la comparaison du code tournant d'un message reçu au code tournant du message précédent. Si le code tournant est différent, le message est un nouveau message, même si les valeurs portées par les autres bits du message sont inchangées par rapport à celles du message précédent. C'est le cas lorsque l'interface homme-machine n'est pas sollicitée par l'opérateur. Si le code tournant est identique, le message est identique au message précédent du fait d'un blocage de moyens de transmission compris dans le concentrateur de données. Un disfonctionnement est alors détecté.

On comprend ainsi que la structure même des messages émis sur un bus de données est protégée contre les erreurs à différents niveaux de la chaine de transmission, grâce aux bits de validité, aux bits de parité, et aux codes tournants.

## Revendications

1. Interface homme-machine (1), notamment pour un véhicule ou pour un dispositif, comprenant au moins un élément de préhension (2) muni d'au moins un moyen de génération de signaux (2a,2b,2c), un contrôleur (5), et une embase assurant la fixation et la mobilité de l'élément de préhension (2) ainsi que le passage de connexions de données, **caractérisée en ce que** l'élément de préhension (2) intègre au moins deux concentrateurs de données (3,3a,3b), chaque concentrateur de données (3a,3b) étant connecté en entrée en parallèle à au moins un moyen de génération de signaux (2a,2b,2c) et connecté en sortie au contrôleur (5) à travers l'embase par l'intermédiaire de bus de données distincts (8a,8b).

2. Interface homme-machine selon la revendication 1, dans laquelle un moyen de génération de signaux est choisi parmi un capteur d'inclinaison de l'élément de préhension (2) par rapport à une position de repos, un bouton, un bouton multidirectionnel, un capteur d'effort et un capteur de préhension.

3. Interface homme-machine selon l'une des revendications 1 ou 2, comportant au moins un autre calculateur ou moyen de commande, chaque bus de données (8a,8b) étant connecté en plus du contrôleur (5) audit au moins un autre calculateur ou moyen de commande.

4. Interface homme-machine selon la revendication 3, comportant au moins un moyen de contrôle de la poignée de commande (6a,6b), connecté chacun en sortie au contrôleur (5) par un bus de données alternatif (9a,9b), chaque bus de données (8a,8b) étant connecté audit au moins un moyen de contrôle de la poignée de commande (6a,6b), le moyen de contrôle de la poignée de commande (6a,6b) étant configuré pour transmettre les données reçues du bus de données (8a,8b) au contrôleur (5) en plus des fonctions de contrôle de la poignée de commande.

5. Interface homme-machine selon l'une quelconque des revendications 1 à 4, comprenant au moins un moyen de communication (4a) connecté en entrée à au moins un moyen de génération de signaux en parallèle de la connexion aux concentrateurs de données (3,3a,3b), chaque moyen de communication (4a) étant connecté au contrôleur (5) par une connexion discrète (7a,7b).

6. Interface homme-machine selon l'une quelconque des revendications 1 à 4, comprenant au moins un moyen de communication (4c) connecté en entrée à au moins un moyen de génération de signaux en parallèle de la connexion aux concentrateurs de données (3,3a,3b), chaque moyen de communication (4c) étant connecté au contrôleur (5) par un bus de communication (7a,7b).

7. Interface homme-machine selon l'une quelconque des revendications 1 à 6, dans lequel un concentrateur de données (3,3a,3b) comprend un moyen de calcul (11) et un moyen de communication (13) connecté à l'un des bus de données (8a, 8b), le moyen de calcul (11) étant configuré pour commander le moyen de communication (13) connecté au bus de données (8) de sorte que les messages émis présentent une structure prédéfinie dans laquelle des bits de validité sont associés aux bits associés au signaux des moyens de génération de signaux, l'ensemble étant structuré en bytes associé chacun à un bit de parité, chaque message émis étant associé à un code tournant incrémenté à chaque émission, les bits de validité, les bits de parité et le code tournant étant configurés de sorte que l'on puisse détecter un caractère défaillant du message à la réception.

8. Interface homme-machine selon la revendication 7, dans laquelle un moyen de génération de signaux émet simultanément un signal dit normalement ouvert, et un signal complémentaire dit normalement fermé.

9. Aéronef comprenant une interface selon l'une quelconque des revendications précédentes, dans lequel le contrôleur (5) est un contrôleur de vol.

## Patentansprüche

1. Mensch-Maschine-Schnittstelle (1), insbesondere für ein Fahrzeug oder für eine Vorrichtung, umfassend mindestens ein Greifelement (2), das mit mindestens einem Signalerzeugungsmittel (2a, 2b, 2c) versehen ist, eine Steuerung (5) und eine Basis, die die Befestigung und Beweglichkeit des Greifelements (2) sowie die Durchführung von Datenverbindungen gewährleistet, **dadurch gekennzeichnet, dass** im Greifelement (2) mindestens zwei Datenkonzentratoren (3, 3a, 3b) integriert sind, wobei jeder Datenkonzentrator (3a, 3b) parallel als Eingang mit mindestens einem Signalerzeugungsmittel (2a, 2b, 2c) verbunden ist und als Ausgang über die Basis über separate Datenbusse (8a, 8b) mit der Steuerung (5) verbunden ist.

2. Mensch-Maschine-Schnittstelle nach Anspruch 1, wobei ein Signalerzeugungsmittel aus einem Neigungssensor des Greifelements (2) in Bezug auf eine Ruheposition, einem Knopf, einem Mehrrichtungsknopf, einem Kraftsensor und einem Greifsensor ausgewählt ist.

3. Mensch-Maschine-Schnittstelle nach einem der Ansprüche 1 oder 2, die mindestens einen weiteren Rechner oder ein weiteres Steuermittel umfasst, wobei jeder Datenbus (8a, 8b) zusätzlich zur Steuerung (5) mit dem mindestens einen weiteren Rechner oder Steuermittel verbunden ist.

4. Mensch-Maschine-Schnittstelle nach Anspruch 3, umfassend mindestens ein Steuermittel des Steuergriffs (6a, 6b), das jeweils am Ausgang über einen alternativen Datenbus (9a, 9b) mit der Steuerung (5) verbunden ist, wobei jeder Datenbus (8a, 8b) mit dem mindestens einen Steuermittel des Steuergriffs (6a, 6b) verbunden ist, wobei das Steuermittel des Steuergriffs (6a, 6b) so konfiguriert ist, dass es zusätzlich zu den Steuerfunktionen des Steuergriffs die vom Datenbus (8a, 8b) empfangenen Daten an die Steuerung (5) überträgt.

5. Mensch-Maschine-Schnittstelle nach einem der Ansprüche 1 bis 4, umfassend mindestens ein Kommunikationsmittel (4a), das am Eingang mit mindestens einem Signalerzeugungsmittel parallel zur Verbindung zu den Datenkonzentratoren (3, 3a, 3b) verbunden ist, wobei jedes Kommunikationsmittel (4a) über eine diskrete Verbindung (7a, 7b) mit der Steuerung (5) verbunden ist.

6. Mensch-Maschine-Schnittstelle nach einem der Ansprüche 1 bis 4, umfassend mindestens ein Kommunikationsmittel (4c), das am Eingang mit mindestens einem Signalerzeugungsmittel parallel zur Verbindung mit den Datenkonzentratoren (3, 3a, 3b) verbunden ist, wobei jedes Kommunikationsmittel (4c) über einen Kommunikationsbus (7a, 7b) mit der Steuerung (5) verbunden ist.

7. Mensch-Maschine-Schnittstelle nach einem der Ansprüche 1 bis 6, wobei ein Datenkonzentrator (3,3a,3b) ein Rechenmittel (11) und ein Kommunikationsmittel (13) umfasst, das mit einem der Datenbusse (8a, 8b) verbunden ist,
wobei das Rechenmittel (11) so konfiguriert ist, dass es das mit dem Datenbus (8) verbundene Kommunikationsmittel (13) so steuert, dass die gesendeten Nachrichten eine vordefinierte Struktur aufweisen, in der den Bits, die den Signalen der Signalerzeugungsmittel zugeordnet sind, Gültigkeitsbits zugeordnet sind, wobei alles in Bytes strukturiert ist, die jeweils einem Paritätsbit zugeordnet sind, wobei jede gesendete Nachricht einem bei jeder Übertragung erhöhten Rollingcode zugeordnet ist, wobei die Gültigkeitsbits, die Paritätsbits und der Rollingcode so konfiguriert sind, dass ein fehlerhaftes Zeichen der Nachricht beim Empfang erkannt werden kann.

8. Mensch-Maschine-Schnittstelle nach Anspruch 7, wobei ein Signalerzeugungsmittel gleichzeitig ein so genanntes normal offenes Signal und ein zusätzliches so genanntes normal geschlossenes Signal aussendet.

9. Luftfahrzeug, das eine Schnittstelle nach einem der vorhergehenden Ansprüche umfasst, wobei die Steuerung (5) eine Flugsteuerung ist.

## Claims

1. Human-machine interface (1), in particular for a vehicle or for a device, comprising at least one gripping element (2) equipped with at least one signal-generating means (2a, 2b, 2c), a controller (5), and a base for fastening and mobilising the gripping element (2) and allowing the passage of data connections, **characterised in that** the gripping element (2) incorporates at least two data concentrators (3, 3a, 3b), each data concentrator (3a, 3b) being connected, at input, in parallel to at least one signal-generating means (2a, 2b, 2c) and connected, at output, to the controller (5) via the base by way of separate data buses (8a, 8b).

2. Human-machine interface according to claim 1, wherein a signal-generating means is selected from a tilt sensor of the gripping element (2) relative to a rest position, a button, a multidirectional button, a force sensor, and a gripping sensor.

3. Human-machine interface according to one of claims 1 or 2, including at least one other computer or control means, each data bus (8a, 8b) being connected, in addition to the controller (5), to said at least one other computer or control means.

4. Human-machine interface according to claim 3, including at least one means for controlling the control handle (6a, 6b), each connected, at output, to the controller (5) by an alternative data bus (9a, 9b), each data bus (8a, 8b) being connected to said at least one means for controlling the control handle (6a, 6b), the means for controlling the control handle (6a, 6b) being configured to transmit the data received from the data bus (8a, 8b) to the controller (5) in addition to the functions for controlling the control handle.

5. Human-machine interface according to any of claims 1 to 4, comprising at least one communication means (4a) connected, at input, to at least one signal-generating means in parallel with the connection to the data concentrators (3, 3a, 3b), each communication means (4a) being connected to the controller (5) by a discrete connection (7a,7b).

6. Human-machine interface according to any of claims 1 to 4, comprising at least one communication means (4c) connected, at input, to at least one signal-generating means in parallel with the connection to the data concentrators (3, 3a, 3b), each communication means (4c) being connected to the controller (5) by a communication bus (7a,7b).

7. Human-machine interface according to any of claims 1 to 6, wherein a data concentrator (3,3a,3b) comprises a computational means (11) and a communication means (13) connected to one of the data buses (8a, 8b),
the computational means (11) being configured to control the communication means (13) connected to the
bus (8) such that the transmitted messages have a predefined structure wherein validity bits are associated with the bits associated with the signals of the signal-generating means, the whole being structured in bytes each associated with a parity bit, each transmitted message being associated with a rolling code incremented at each transmission, the validity bits, the parity bits and the rolling code being configured so that a faulty character of the message can be detected upon reception.

8. Human-machine interface according to claim 7, wherein a signal-generating means simultaneously transmits a so-called normally open signal, and a complementary so-called normally closed signal.

9. Aircraft comprising an interface according to any of the preceding claims, wherein the controller (5) is a flight controller.
